# EUROPEAN PATENT APPLICATION

(11) **EP 4 708 082 A1**
(43) Date of publication of application: **11.03.2026**
(21) Application number: 25200511.1
(22) Date of filing: 05.09.2025
(51) Int. Cl.: G06F 16/9032, G06F 16/953, G06Q 30/0601

(54) **ITEM RETRIEVAL USING SYNTHETIC ITEMS FROM GENERATIVE MODEL**

(30) Priority: 09.09.2024 US 202418828560
(71) Applicant: eBay Inc., San Jose, CA 95125 (US)
(72) Inventor: BLIGH, Joshua James, SAN JOSE (US); MA, Dongming, SAN JOSE (US); DING, Zhiyu, SAN JOSE (US); SCHONFELD, Daniel Ryan, SAN JOSE (US); WU, Gaomin, SAN JOSE (US); QU, Xingming, SAN JOSE (US); XUE, Chen, SAN JOSE (US); ILARDI, Adam Joseph, SAN JOSE (US)
(74) Representative: Müller-Boré & Partner Patentanwälte PartG mbB

(57) **Abstract**

Some aspects relate to technologies for using synthetic items generated by a generative model to perform item retrieval for a listing platform based on seed item listings. In some examples, a textual indication of a seed item listing from a listing platform is received. Based on the seed item listing, a textual indication of one or more synthetic items generated by a generative model are obtained. The textual indication of each synthetic item can be generated by the generative model at runtime or previously generated by the generative model and retrieved at runtime using one or more caching techniques. A search is performed on an item listings data store for the listing platform based on the textual indication of the one or more synthetic items to identify one or more item listings. An indication of the one or more item listings is provided for presentation as item listing recommendations.

## Description

### BACKGROUND

Listing platforms, such as e-commerce websites, are online platforms that offer products, services, digital content (e.g., music, videos, etc.), or other items to users. Such platforms typically offer a vast number of items. While some items are relevant to any given user, the majority is not. As a result, item retrieval for listing platforms is a particular Internet-centric problem that has proven to be difficult to fully address. That is, given a large number of items available on a listing platform, what items should be retrieved and presented to a user and in what order.

Given the vast number of items available, listing platforms include item retrieval functionality, such as search and recommendation, to assist users in finding items of interest on the platforms. For instance, listing platforms often provide search capabilities that receive user queries and return search results identifying items relevant to the user queries. Listing platforms also often leverage recommendation systems to recommend items that are likely of interest to users based on a variety of information, such as an item currently being viewed by a user, user attributes, and user behavior on the listing platforms (e.g., previous item views, purchases, etc.).

### SUMMARY

Some aspects of the present technology relate to, among other things, performing item retrieval on a listing platform by leveraging synthetic items generated by a generative model to provide item listing recommendations based on a seed item listing. In accordance with some aspects, a textual indication of a seed item listing from a listing platform is received. For instance, a seed item listing can be identified based on user interactions with a listing platform, such as a selection to view a webpage for an item listing. Based on the seed item listing, a textual indication of one or more synthetic items is generated by a generative model are obtained. The textual indication of each synthetic item can be generated by the generative model at runtime or previously generated by the generative model and retrieved at runtime using one or more caching techniques. A synthetic item from the generative model comprises text that identifies or describes an item that is not directly tied to a particular item listing on the listing platform. As such, the generative model can be used to generated synthetic items that are similar to or complementary to an item listing. Because each synthetic item does not correspond directly to a given item listing, a search is performed on an item listings data store for the listing platform using each synthetic item to identify and rank item listings. An indication of at least a portion of those item listings is then provided for presentation as item listing recommendations.

This summary is provided to introduce a selection of concepts in a simplified form that are further described below in the Detailed Description. This summary is not intended to identify key features or essential features of the claimed subject matter, nor is it intended to be used as an aid in determining the scope of the claimed subject matter.

### BRIEF DESCRIPTION OF THE DRAWINGS

The present technology is described in detail below with reference to the attached drawing figures, wherein:
FIG. 1 is a block diagram illustrating an exemplary system in accordance with some implementations of the present disclosure;
FIG. 2 is a block diagram showing an example process for performing item retrieval for a listing platform using synthetic items from a generative model in accordance with some implementations of the present disclosure;
FIG. 3 is a block diagram showing another example process for performing item retrieval for a listing platform using synthetic items from a generative model in accordance with some implementations of the present disclosure;
FIG. 4 is a flow diagram showing a method for performing item retrieval for a listing platform using synthetic items from a generative model in accordance with some implementations of the present disclosure;
FIG. 5 is a flow diagram showing another method for performing item retrieval for a listing platform using synthetic items from a generative model in accordance with some implementations of the present disclosure; and
FIG. 6 is a block diagram of an exemplary computing environment suitable for use in implementations of the present disclosure.

### DETAILED DESCRIPTION

### Overview

Many listing platforms (e.g., e-commerce websites) offer a large number of item listings. To facilitate item retrieval, listing platforms typically employ computer-based search systems in which end users can submit search queries from user devices over a network (e.g., the Internet) to search servers of the listing platforms. The search servers query data stored in electronic databases to return, over the network to the user devices, search results that identify certain item listings from the databases. Each search query involves consumption of computer resources (e.g., bandwidth, memory, CPU usage), as well as puts wear and tear on physical computer components. Given the vast number of item listings available for many listing platforms and the high volume of users accessing the listing platforms, the computer resources consumed for search purposes can be extensive. If the search system is ineffective in returning relevant search results, users will submit additional search queries until relevant search results are returned. These repetitive search queries can exponentially increase the computer resource consumption of the search systems. Designing search systems to provide relevant items from listing platforms to reduce such repetitive search queries and their corresponding computer resource consumption is a technical problem faced by listing platforms.

Users often use search systems to search for similar items or complementary items on listing platforms. In some instances, users search for similar items, for instance, when comparison shopping (e.g., comparing similar mobile phones). In other instances, users search for complementary items. For instance, if a user has recently viewed or purchased a mobile phone, the user could search the listing platform for mobile phone accessories, such as charging cables and phone cases. Conventionally, users need to search for each item separately, resulting in numerous search inputs to the search system and thereby placing extensive computer resource consumption on the search system as discussed above. To address this problem and attempt to reduce the number of search queries that need to be processed, some conventional listing platforms provide search systems that recommend item listings from the listing platform. The conventional approach for such search systems is to identify similar item listings or complementary item listings by leveraging historical user behavior on the listing platform (e.g., what items were viewed by and/or purchased by the same users). However, this conventional approach suffers from limitations when there is insufficient user activity information (e.g., cold start problem). As a result, conventional search systems often don't provide sufficient item listing recommendations, resulting in users entering multiple searches that increase the resource consumption required to process the queries.

Accordingly, while item retrieval systems are useful tools for locating item listings on listing platforms, shortcomings in existing search and recommendation technologies used by conventional item retrieval systems often result in the consumption of an unnecessary quantity of computing resources (e.g., I/O costs, network packet generation costs, throughput, memory consumption, etc.). As a result of shortcomings in conventional search systems, users often have to submit multiple queries before finding desired item listings. For example, a user may issue a first query to a search engine of a listing platform that returns a set of search results. The user may browse the search results and select certain search results to access the corresponding item listings. Selection of search results causes retrieval of the corresponding item listings. Additionally, in some cases, applications are launched in order to render data associated with the item listings. In the context of recommendation, when recommended item listings are insufficient, users may select to view certain item listings and discover the listings are not what the user is seeking. This often results in the users turning to query-based searching, which can involve issuing numerous queries in an attempt to identify relevant item listings as discussed above.

These repetitive inputs result in increased computing resource consumption for the search system and listing platform, among other things. For instance, repetitive user queries result in packet generation costs that adversely affect computer network communications. Each time a user issues a query, the contents or payload of the query is typically supplemented with header information or other metadata within a packet in TCP/IP and other protocol networks. Accordingly, when this functionality is multiplied by all the inputs needed to obtain the desired data, there are throughput and latency costs by repetitively generating this metadata and sending it over a computer network. In some instances, these repetitive inputs (e.g., repetitive clicks, selections, or queries) increase storage device I/O (e.g., excess physical read/write head movements on non-volatile disk) because each time a user inputs unnecessary information, such as inputting several queries, the computing system often has to reach out to the storage device to perform a read or write operation, which is time consuming, error prone, and can eventually wear on components, such as a read/write head. Further, if users repetitively issue queries, it is expensive because processing queries consumes a lot of computing resources. For example, for some item retrieval systems, a query execution plan may need to be calculated each time a query is issued, which could require a system to find the least expensive query execution plan to fully execute the query. This decreases throughput and increases network latency, and can waste valuable time.

Aspects of the technology described herein improve the functioning of the computer itself in light of these shortcomings in existing item retrieval technologies by providing a solution in which an item retrieval system for a listing platform leverages synthetic items from a generative model (e.g., a large language model) to identify item listings recommendations to provide to a user device. As used herein, a synthetic item refers to text generally identifying or describing an item that is generated by a generative model given a textual indication of an item listing from a listing platform. A synthetic item is "synthetic" in the context that it does not directly identify an item listing on the listing platform. However, the synthetic item can be used to search the listing platform for actual item listings to provide as item listing recommendations. In this way, the generative model can be prompted to generate synthetic items that are similar to or complimentary to an input item listing, and the synthetic items are used to identify and return similar item listing recommendations or complimentary item listing recommendations.

In accordance with some configurations, the item retrieval system receives a textual indication of a seed item listing (e.g., an item listing identifier, an item title, or an item description) for retrieving item listing recommendations to return to a user device. The seed item listing comprises an item listing available on the listing platform and can be identified, for instance, based on user interaction with the listing platform. For example, when a user selects to view a webpage for a particular item listing, the item retrieval system could receive a textual indication of that item listing as a seed item listing in order to provide item listing recommendations to include on the webpage for the item listing.

The item retrieval system obtains synthetic items generated by a generative model based on the seed item listing. In some aspects, the synthetic items are generated by the generative model at runtime in response to receiving the seed item listing. For instance, a prompt with a textual indication of the seed item listing could be generated and provided as input to the generative model to obtain the synthetic items. Because generation of the synthetic items at runtime increases latency, in some aspects, the item retrieval system caches synthetic items from the generative and attempts to use the cached synthetic items at runtime. For instance, synthetic items could be generated offline for certain item listings and cached. In some aspects, synthetic items are cached in a key-value store in which item listings used to generate synthetic items are stored as keys and their associated synthetic items are stored as values. The key-value store enables exact matching at runtime to determine if the seed item listing exactly matches a key in the key-value store. In some aspects, the item retrieval system alternatively or additionally employs approximate matching (e.g., fuzzy matching or semantic matching) in which the system determines whether the seed item listing is sufficiently similar to, but does not exactly match, another item listing for which synthetic items have been generated.

After obtaining synthetic items for the seed item listing, an item listings data store is queried using each synthetic item in order to identify and rank item listings from the listing platform. A user interface is provided to the user device that presents those item listings as recommendations.

Aspects of the technology described herein provide a number of improvements over existing item retrieval technologies. For instance, a generative model is used to generate synthetic items that can be, for instance, similar to or complementary to item listings from the listing platform, and the synthetic items can be used to search for item listings to provide as recommendations. This provides a non-conventional and non-generic way for an item retrieval system to identify similar or complementary item listings. For instance, while some conventional systems rely on user activity information on a listing platform to identify similar or complimentary items, aspects of the technology described herein do not need to use such information. Accordingly, the technology described herein can provide robust item listing recommendations even when no or limited user activity information is available (e.g., cold start problem).

Additionally, computing resource consumption is improved relative to existing item retrieval technologies. In particular, use of synthetic items allows for a robust set of relevant item listing recommendations to be provided to user devices. As such, the relevance of item listings returned using aspects of the technology described herein eliminates (or at least reduces) the repetitive user queries, search result selections, and rendering of item listings relative to conventional techniques because relevant item listings are provided without the need for users to continuously input various search queries to access search results and/or continuously make item selections to obtain further information around presented item listings. Accordingly, aspects of the technology described herein decrease computing resource consumption, such as packet generation costs. For instance, a user query (e.g., an HTTP request), would only need to traverse a computer network once (or fewer times relative to existing technologies). Specifically, the contents or payload of the user query is supplemented with header information or other metadata within a packet in TCP/IP and other protocol networks once for the initial user query. Such packet for a user query is only sent over the network once or fewer times. Thus, there is no repetitive generation of metadata and continuous sending of packets over a computer network.

In like manner, aspects of the technology described herein improve storage device or disk I/O and query execution functionality, as they only need to go out to disk a single time (or fewer times relative to existing search technologies). As described above, the inadequacy of existing search and recommendation technologies results in repetitive user queries, search result selections, and item listing renderings. This causes multiple traversals to disk. In contrast, aspects described herein reduce storage device I/O because the user provides only minimal inputs and so the computing system does not have to reach out to the storage device as often to perform a read or write operation. For example, the system can leverage synthetic items from a generative model to identify item listings to provide relevant item listing recommendations. Accordingly, there is not as much wear on components, such as a read/write head, because disk I/O is substantially reduced.

### Example System for Item Retrieval using Synthetic Items from a Generative Model

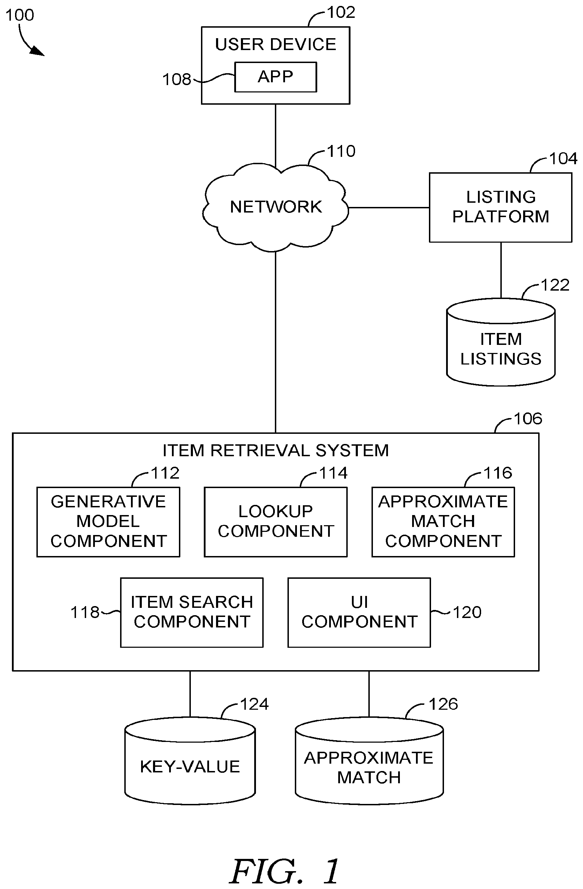

With reference now to the drawings, FIG. 1 is a block diagram illustrating an exemplary system 100 for performing item retrieval on a listing platform by using synthetic items from a generative model given a seed item in accordance with implementations of the present disclosure. It should be understood that this and other arrangements described herein are set forth only as examples. Other arrangements and elements (e.g., machines, interfaces, functions, orders, and groupings of functions, etc.) can be used in addition to or instead of those shown, and some elements may be omitted altogether. Further, many of the elements described herein are functional entities that may be implemented as discrete or distributed components or in conjunction with other components, and in any suitable combination and location. Various functions described herein as being performed by one or more entities may be carried out by hardware, firmware, and/or software. For instance, various functions may be carried out by a processor executing instructions stored in memory.

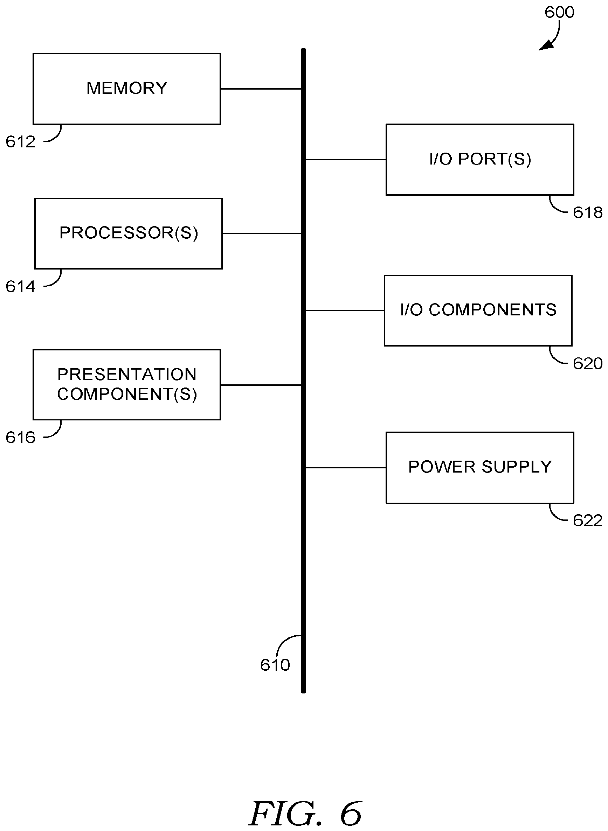

The system 100 is an example of a suitable architecture for implementing certain aspects of the present disclosure. Among other components not shown, the system 100 includes a user device 102, a listing platform 104, and an item retrieval system 106. Each of the user device 102, the listing platform 104, and the item retrieval system 106 shown in FIG. 1 can comprise one or more computer devices, such as the computing device 600 of FIG. 6, discussed below. As shown in FIG. 1, the user device 102, the listing platform 104, and the item retrieval system 106 can communicate via a network 110, which may include, without limitation, one or more local area networks (LANs) and/or wide area networks (WANs). Such networking environments are commonplace in offices, enterprise-wide computer networks, intranets, and the Internet. It should be understood that any number of user devices and servers may be employed within the system 100 within the scope of the present technology. Each may comprise a single device or multiple devices cooperating in a distributed environment. For instance, the listing platform 104 and the item retrieval system 106 could each be provided by multiple server devices collectively providing the functionality of the listing platform 104 and the item retrieval system 106 as described herein. Additionally, other components not shown may also be included within the network environment.

The user device 102 can be a client device on the client-side of operating environment 100, while the listing platform 104 and the item retrieval system 106 can be on the server-side of operating environment 100. The listing platform 104 and/or the item retrieval system 106 can each comprise server-side software designed to work in conjunction with client-side software on the user device 102 so as to implement any combination of the features and functionalities discussed in the present disclosure. For instance, the user device 102 can include an application 108 for interacting with the listing platform 104 and/or the item retrieval system 106. The application 108 can be, for instance, a web browser or a dedicated application for providing functions, such as those described herein. This division of operating environment 100 is provided to illustrate one example of a suitable environment, and there is no requirement for each implementation that any combination of the listing platform 104 and the item retrieval system 106 remain as separate entities. For instance, in some aspects, the item retrieval system 106 is a part of the listing platform 104. While the operating environment 100 illustrates a configuration in a networked environment with a separate user device, listing platform, and item retrieval system, it should be understood that other configurations can be employed in which aspects of the various components are combined.

The user device 102 may comprise any type of computing device capable of use by a user. For example, in one aspect, a user device may be the type of computing device 600 described in relation to FIG. 6 herein. By way of example and not limitation, the user device 102 may be embodied as a personal computer (PC), a laptop computer, a mobile or mobile device, a smartphone, a tablet computer, a smart watch, a wearable computer, a personal digital assistant (PDA), an MP3 player, global positioning system (GPS) or device, video player, handheld communications device, gaming device or system, entertainment system, vehicle computer system, embedded system controller, remote control, appliance, consumer electronic device, a workstation, or any combination of these delineated devices, or any other suitable device. A user may be associated with the user device 102 and may interact with the listing platform 104 and/or the item retrieval system 106 via the user device 102.

The listing platform 104 can be implemented using one or more server devices, one or more platforms with corresponding application programming interfaces, cloud infrastructure, and the like. The listing platform 104 generally provides, to user devices such as the user device 102, item listings describing items (physical or digital) available for purchase, rent, streaming, download, etc. For instance, the listing platform 104 could comprise an e-commerce platform, in which listed products or services are available for purchase by users of the user device 102 upon navigation to the listing platform 104. As other examples, the listing platform 104 could comprise a rental platform listing various items for rent (e.g., equipment, tools, real estate, vehicles, contract employees) or a media platform listing digital content items (e.g., digital content for streaming/download).

The functionality of the listing platform 104 includes provision of interfaces enabling surfacing of item listings for items to users of the listing platform 104. Item listings for items available for sale/rent/consumption via the listing platform 104 are stored by the item listings data store 122. Each item listing may include a description relating to an item comprising one or more of a price in a currency, reviews, images of the item, shipment options, a rating, a condition of the item, a size of the item, a color of the item, etc. In aspects, each item is associated with one or more categories including meta-categories and leaf categories. For example, the meta-categories are each divisible into subcategories (or branch categories), whereas leaf categories are not divisible.

The item retrieval system 106 performs item retrieval for the listing platform 104 to provide item listing recommendations based on seed item listings using synthetic items from a generative model. Based on interactions between a user device, such as the user device 102, and the listing platform 104, an input for item retrieval is received by the item retrieval system 106. The input is based on a seed item listing (or multiple seed item listings) identified from the interactions with the listing platform 104. For instance, a user could select to view a webpage for an item listing and that item listing is identified as a seed item listing (e.g., for providing item listing recommendations on the webpage for the item listing or on a personalized homepage provided to the user device 102 by the listing platform 104). The input could comprise, for instance, an item listing identifier, an item title, and/or an item description for the seed item listing. In some aspects, the input could be supplemented with additional information, such as, for instance, user information for the current user interacting with the listing platform 104 (e.g., attributes or behavior information regarding the user), chat history from a current or previous chat session for the user, and information for other users.

Given a seed item listing, the item retrieval system 106 obtains one or more synthetic items generated by a generative model based on the seed item listing, identifies item listings on the listing platform 104 for each synthetic item, and provides item listing recommendations to the user device 102 based on those identified item listings. In some aspects, the generative model is used to generate the synthetic items for a given seed item at runtime. In other aspects, the item retrieval system caches synthetic items generated for item listings and uses the cached synthetic items to reduce latency at runtime.

As shown in FIG. 1, the item retrieval system 106 includes a generative model component 112, a lookup component 114, an approximate match component 116, an item search component 118, and a user interface component 120. The components of the item retrieval system 106 may be in addition to other components that provide further additional functions beyond the features described herein. The item retrieval system 106 can be implemented using one or more server devices, one or more platforms with corresponding application programming interfaces, cloud infrastructure, and the like. While the item retrieval system 106 is shown separate from the listing platform 104 and the user device 102 in the configuration of FIG. 1, it should be understood that in other configurations, some of the functions of the item retrieval system 106 can be provided on the listing platform 104 and/or the user device 102. Additionally, while the components 112, 114, 116, 118, 120 are shown as part of the item retrieval system 106, in other configurations, one or more of the components can be provided by the listing platform 104 or another location not shown in FIG. 1. The components can be provided by a single entity or multiple entities.

In some aspects, the functions performed by components of the item retrieval system 106 are associated with one or more applications, services, or routines. In particular, such applications, services, or routines may operate on one or more user devices, servers, may be distributed across one or more user devices and servers, or be implemented in the cloud. Moreover, in some aspects, these components of the item retrieval system 106 may be distributed across a network, including one or more servers and client devices, in the cloud, and/or may reside on a user device. Moreover, these components, functions performed by these components, or services carried out by these components may be implemented at appropriate abstraction layer(s) such as the operating system layer, application layer, hardware layer, etc., of the computing system(s). Alternatively, or in addition, the functionality of these components and/or the aspects of the technology described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc. Additionally, although functionality is described herein with regards to specific components shown in example system 100, it is contemplated that in some aspects, functionality of these components can be shared or distributed across other components.

The generative model component 112 of the item retrieval system 106 employs a generative model to generate text identifying synthetic items based on item listings from the listing platform 104. To generate synthetic items for a given item listing from the listing platform 104, the generative model component 112 generates a prompt that includes a textual indication of the item listing and provides the prompt to the generative model. The textual indication of the item listing is a text string that identifies and/or describes the item listing, such as an item title or an item description for the item listing (e.g., retrieved from the item listings data store 122). Given the prompt, the generative model outputs a textual indication of one or more synthetic items. The textual indication of each synthetic item is a text string that identifies and/or describes the synthetic item, such as an item title or an item description.

The prompt provided to the generative model comprises text that instructs the generative model to generate text for one or more synthetic items given a textual indication of an item listing. In some aspects, the prompt identifies a type of synthetic item to generate relative to the item from the item listing. For instance, in some instances, the prompt instructs the generative model to generate text of synthetic items that are similar to the item from the item listing, while in other instances, the prompt instructs the generative model to generate text of synthetic items that are complementary to item from the item listing. A similar item is one that can be interchanged with another item (e.g., similar mobile phones given an item listing for a mobile phone), while a complementary item is one that complements another item (e.g., mobile phone accessories given an item listing for a mobile phone).

In some configurations, the generative model component 112 determines the type of synthetic item (e.g., similar or complimentary) to prompt the generative model to generate based on a variety of different inputs. For instance, in some aspects, the user (e.g., associated with the user device 102) can explicitly specify the type of recommended items desired, and the generative model component 112 generates the prompt based on that user input. In some aspects, the generative model component 112 automatically determines the type of synthetic item based on user behavior information tracked for the user. For instance, given an item listing of a mobile device, the prompt could be generated to provide similar mobile devices if the user has not purchased the mobile device; while the prompt could be generated to provide mobile device accessories if the user has purchased the mobile device. In some aspects, the generative model component 112 automatically determines the type of synthetic item based on a category of the item listing. This reflects that the user intent is likely to view similar items for some categories of items and to view complimentary items for other categories. For instance, the prompt could be generated to provide complimentary items for a mobile phone item listing given that the user would likely intend to purchase mobile phone accessories in addition to the mobile phone. However, the prompt could be generated to provide similar items for a phone case item listing given that the user is likely focusing on purchasing just a phone case. In some aspects, the generative model selects a prompt template from a number predefined prompt templates (e.g., based on user input, user activity, the category of the seed item listing, etc.) and generates the prompt using the prompt template, for instance, by inserting text identifying the seed item listing.

The generative model used by the generative model component 112 to generate synthetic items for item listings can comprise a language model that includes a set of statistical or probabilistic functions to perform Natural Language Processing (NLP) in order to understand, learn, and/or generate human natural language content. For example, a language model can be a tool that determines the probability of a given sequence of words occurring in a sentence or natural language sequence. Simply put, it can be a model that is trained to predict the next word in a sentence. A language model is called a large language model (LLM) when it is trained on enormous amount of data and/or has a large number of parameters. Some examples of LLMs are GOOGLE's BERT and OpenAI's GPT-3 and GPT-4. These models have capabilities ranging from writing a simple essay to generating complex computer codes - all with limited to no supervision. Accordingly, an LLM can comprise a deep neural network that is very large (billions to hundreds of billions of parameters) and understands, processes, and produces human natural language by being trained on massive amounts of text. These models can predict future words in a sentence letting them generate sentences similar to how humans talk and write.

In accordance with some aspects, the generative model used by the generative model component 112 comprises a neural network (i.e., an artificial neural network). As used herein, a neural network comprises multiple operational layers, including an input layer and an output layer, as well as any number of hidden layers between the input layer and the output layer. Each layer comprises neurons. Different types of layers and networks connect neurons in different ways. Neurons have weights, an activation function that defines the output of the neuron given an input (including the weights), and an output. The weights are the adjustable parameters that cause a network to produce a correct output.

In some configurations, the generative model used by the generative model component 112 is a pre-trained model (e.g., GPT-4) that has not been fined-tuned. In other configurations, the generative model is a model that is built and trained from scratch or a pre-trained model that has been fine-tuned. In such configurations, the generative model can be trained or fine-tuned using training data. The training data can comprise pairs of data in which an input is paired with a ground truth output to train the generative model to generate output text that targets the ground truth output. For instance, a training data pair could comprise a text string for an item listing (i.e., the input) and a text string identifying one or more items (i.e., the ground truth output). During training, weights associated with each neuron can be updated. Originally, the generative model can comprise random weight values or pre-trained weight values that are adjusted during training. In one aspect, the generative model is trained using backpropagation. The backpropagation process comprises a forward pass, a loss function, a backward pass, and a weight update. This process is repeated using the training data. For instance, each iteration could include providing an input text string to the model, generating an output text string by the generative model, comparing (e.g., computing a loss) the output text string from the generative model with a ground truth output text string paired with the input text string, and updating the model based on the comparison. The goal is to update the weights of each neuron (or other model component) to cause the generative model to produce particular forms of output, such as text identifying synthetic items. Once trained, the weight associated with a given neuron can remain fixed. The other data passing between neurons can change in response to a given input. Retraining the network with additional training data can update one or more weights in one or more neurons.

In some aspects, the generative model component 112 generates synthetic items for a given item listing online (i.e., at runtime). That is, at the time when item listing recommendations are to be provided to a given user device (e.g., the user device 102) based on a seed item listing, the generative model component 112 generates a prompt based on the seed item listing and provides the prompt to the generative model to generate synthetic items that are used to determine the item listing recommendations. For instance, in response to a user selecting to view a webpage for a given item listing, the generative model component 112 could generate synthetic items based on the item for that item listing in order to use the synthetic items to select and present item listing recommendations on the webpage for the item listing.

However, generating synthetic items at runtime introduces latency. To address the latency issue, some configurations employ caching techniques in which synthetic items generated by the generative model component 112 for item listings are cached. The synthetic items could be cached after they are generated online, and/or the generative model component 112 could generate synthetic items for item listings offline and cache the synthetic items.

In configurations using caching, at runtime when a seed item listing is received for providing item listing recommendations, the item retrieval system 106 identifies cached synthetic items based on the seed item listing, and provides item listing recommendations using those synthetic items. The cached synthetic items can be identified for a seed item listing at runtime using exact matching and/or approximate matching.

Exact matching is used herein to refer to search techniques that determine whether synthetic items have been previously generated and cached for the seed item listing. In the configuration shown in FIG. 1, the item retrieval system 106 employs a lookup component 114 and a key-value store 124 to facilitate exact matching. The key-value store 124 is a data store that stores textual indications of item listings (e.g., item listing identifier, item title, or item description) as keys in association with synthetic items generated for each item listing stored as values. For a given seed item listing, the lookup component 114 performs a lookup using the textual indication of the seed item listing to determine if there is a textual indication of an item listing stored in the key-value store 124 that exactly matches. For instance, in the event of the key-value store 124 storing item listing identifiers as keys, the lookup component 114 performs a lookup using the item listing identifier for the seed item listing to determine if that item listing identifier is stored as a key in the key-value store 124. As another example, in the event of the key-value store 124 storing item titles as keys, the lookup component 114 performs a lookup using the item title for the seed item listing to determine if that item title is stored as a key in the key-value store 124. If there is a match found in the key-value store 124, the lookup component 114 retrieves one or more synthetic items stored as values in association with the matching item listing in the key-value store 124.

Approximate matching is used herein to refer to any search techniques that determine whether there is an item listing for which synthetic items have been cached that is similar, but not an exact match, to the seed item listing. In some aspects, the approximate matching could include fuzzy matching, which is used herein to refer to techniques that allow for spelling variations, typos, and other slight different in text between a textual indication of a seed item listing and a textual indication of an item listing for which synthetic items have been cached. In some aspects, the approximate matching could include semantic matching, which is used herein to refer to techniques that go beyond the text of item listings to understand the meaning, context, and relationships between terms. This could be accomplished, for instance, by employing vector representations of item listings. For instance, the vector representation for an item listing could be an embedding generated by an embedding model given text for the item listing (e.g., an item title or item description). An embedding model comprises a machine learning model, such as a neural network, that transforms input data into a vector representation, referred to herein as an embedding, in an embedding space (sometimes referred to as a latent vector space). The embedding space of the embedding model provides a multi-dimensional space in which the similarity between embeddings can be determined, for instance, based on a geometric distance between embeddings in the embedding space. The embeddings generated by a embedding model allow for the similarity between embeddings to be determined (e.g., using cosine similarity).

In the configuration shown in FIG. 1, the item retrieval system 106 employs an approximate match component 116 and an approximate match data store 126 to facilitate approximate matching. The approximate match data store 126 is a data store that stores an indication of each item listing for which synthetic items have been generated. In the case of fuzzy matching, the indication of each item listing stored in the approximate match data store 126 could be text from the item listing (e.g., item title or item description). In the case of semantic matching, the indication of each item listing stored in the approximate match data store 126 could be a vector representation (e.g., an embedding) generated for the item listing.

For a given seed item listing, the approximate match component 116 performs a search on the approximate match data store 126 to determine if there is an item listing in the approximate match data store 126 that is sufficiently similar, although not an exact match, to the seed item listing. When using fuzzy matching, a textual indication of the seed item listing (e.g., item title or item description) could be used to query the approximate match data store 126 to determine if there is a similar item listing. When using semantic matching, a vector representation of the seed item listing could be used to query the approximate match data store 126. For instance, similarity scores (e.g., using cosine similarity) could be determined between the vector representation of the seed item listing and the vector representation of an item listing from the approximate match data store. An item listing can be considered similar if its similarity score exceeds a similarity score threshold. In some instances, the approximate match component 116 identifies a single item listing (e.g., an item listing having the highest similarity score above the similarity score threshold). In other instances, the approximate match component 116 identifies multiple item listings (e.g., any number or up to a predefined N number of item listings having a similarity score above the similarity score threshold).

One or more synthetic items are retrieved for each similar item listing identified in the approximate match data store 126 for a seed item listing. In some aspects, the synthetic items are retrieved from the approximate match data store 126. In other aspects, the synthetic items are retrieved elsewhere. For instance, in some aspects, after identifying a similar item listing in the approximate match data store 126, a lookup could be performed on the key-value store 124 using a textual indication of the similar item listing to retrieve the synthetic item(s) stored therein.

Although FIG. 1 shows the item retrieval system 106 using both exact matching and approximate matching, an item retrieval system could use only one or both of those matching approaches in various configurations of the technology described herein. For example, in some instances, the listing platform 104 has a small and static number of item listings, and synthetic items could be generated and cached for all item listings on the listing platform 104. In that case, the item retrieval system 106 could employ only the lookup component 114 and the key-value store 124. However, in some instances, the number of item listings on the listing platform 104 could be large and/or changing frequently, such that it is unfeasible to generate and cache synthetic items for all item listings. In that case, the approximate match component 116 and approximate match data store 126 can be used to leverage synthetic items cached for a subset of item listings on the listing platform to serve a wider range of seed item listings. In other words, using approximate matching, synthetic items generated and cached for a listing item could be used for seed item listings that are similar to that listing item and for which synthetic items have not been generated and cached. When used together, exact matching provides for a quick and efficient lookup to determine if there is an exact match, followed by approximate matching when an exact match is not found.

In some aspects, the generative model component 112 selects certain item listings from the listing platform 104 for generating and caching synthetic items offline. The generative model component 112 can select the item listings based on a variety of different factors, such as, for instance, demand for the item listings based on user behavior data on the listing platform, such as activity selecting to view the item listings and/or purchase items of the item listings. In this way, synthetic items can be generated and cached offline for item listings that have the highest demand.

In further aspects, when cached synthetic items are not available for a seed item listing (e.g., there is no exact match in the key-value store 124 and/or there is no sufficiently similar match in the approximate match data store 126), the generative model component 112 could be used to generate synthetic items for the seed item listing, and those synthetic items cached.

After obtaining one or more synthetic items for a seed item listing (either by generating the synthetic item(s) at runtime or retrieving the synthetic item(s) from cache), the item search component 118 of the item retrieval system 106 queries the item listings data store 122 to identify and/or rank item listings for the synthetic item(s). Any of a variety of different search techniques can be used to query the item listings data store 122 using a synthetic item listing to recall (i.e., identify) relevant item listings from the item listings data store 122 and to rank those item listings. For instance, the item search component 118 can treat each synthetic item as a text query (e.g., similar to a search query received from a user device) to identify item listings to return as item listing recommendations. In some aspects, the recall and ranking process can take into account other factors, such as user preferences when identifying/ranking the item listing recommendations to provide to the user device.

In some instances, the generative model could generate synthetic items that do not correspond to real-world items. This could be considered a hallucination by the generative model. For instance, given an item listing for a model of a mobile phone that does not support wireless charging, it's possible the generative model could generate a synthetic item identifying a wireless charger for that mobile phone model. However, since the mobile phone model does not support wireless charging, a wireless charger for that mobile phone model does not exist. To address this challenge, in some aspects, the synthetic items are provided into the recall and ranking process. For each synthetic item, a list of item listings that best match the synthetic item (and, in some aspects, user preferences and/or other input) is provided, and an average ranking score of these item listings is calculated as an indicator of their relevance to the synthetic item. If the average ranking score falls below a certain threshold, this indicates that the item listings are not sufficiently relevant to the synthetic item, likely denoting an instance of a hallucination and prompting further refinement and validation of the recommendation process.

The user interface component 120 provides one or more user interfaces for interacting with the listing platform 104 and/or the item retrieval system 106. While shown as part of the item retrieval system 106 in FIG. 1, in some configurations, the user interface component 120 can be part of the listing platform 104. The user interface component 120 provides one or more user interfaces to a user device, such as the user device 102. In some instances, the user interfaces can be presented on the user device 102 via the application 108, which can be a web browser or a dedicated application for interacting with the listing platform 104 and/or the item retrieval system 106. For instance, the user interface component 120 can provide user interfaces for, among other things, providing recommendations identifying item listings selected by the item retrieval system 106 based on a given seed item listing.

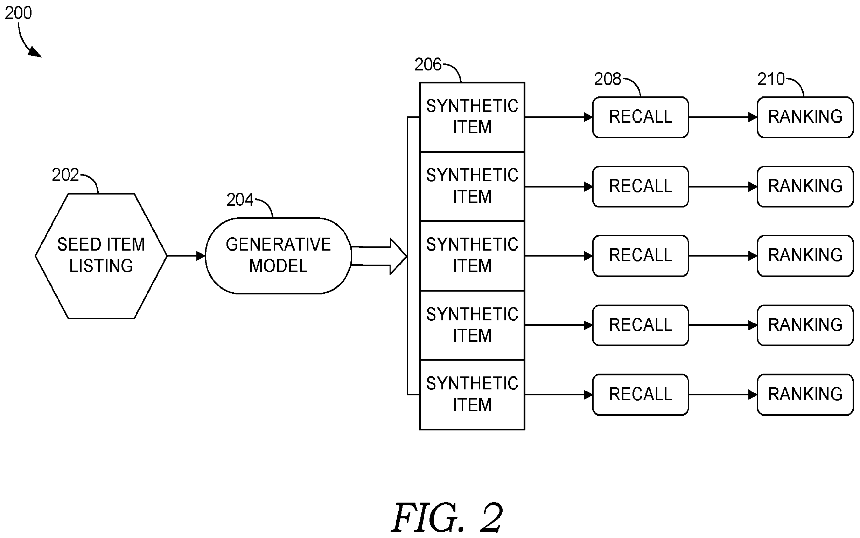

With reference now to FIG. 2, a block diagram is provided showing a process 200 for performing item retrieval using synthetic items generated at runtime by a generative model given a seed item listing in accordance with one aspect of the present technology. As shown in FIG. 2, input is provided to a generative model 204 based on a seed item listing 202. The seed item listing 202 could be an item listing from a listing platform identified based on some user behavior using a user device to interact with the listing platform, such as selecting to view a webpage for the seed item listing or purchasing the item provided by the seed item listing. While only a single seed item listing 202 is shown in FIG. 2, in some aspects, multiple seed item listings could be provided.

The input to the generative model 204 can be a prompt that comprises text identifying the seed item listing (e.g., item title or item description) and providing instructions to the generative model 204 regarding how to generate the synthetic items (e.g., whether to generate synthetic items that are similar to the seed item or complimentary to the seed item). The generative model 204 can correspond to the generative model used by the generative model component 112 of FIG 1. Given the prompt, the generative model 204 generates text identifying multiple synthetic items 206. The text for each synthetic item could comprise, for instance, an item title or item description. Each of the synthetic items 206 is used to perform recall 208 on an item listings data store (e.g., the item listings data store 122 of FIG. 1) to identify relevant item listings. Ranking 210 is performed on the identified item listings for selecting and/or ordering the item listings that are provided as item listing recommendations to the user device of the user.

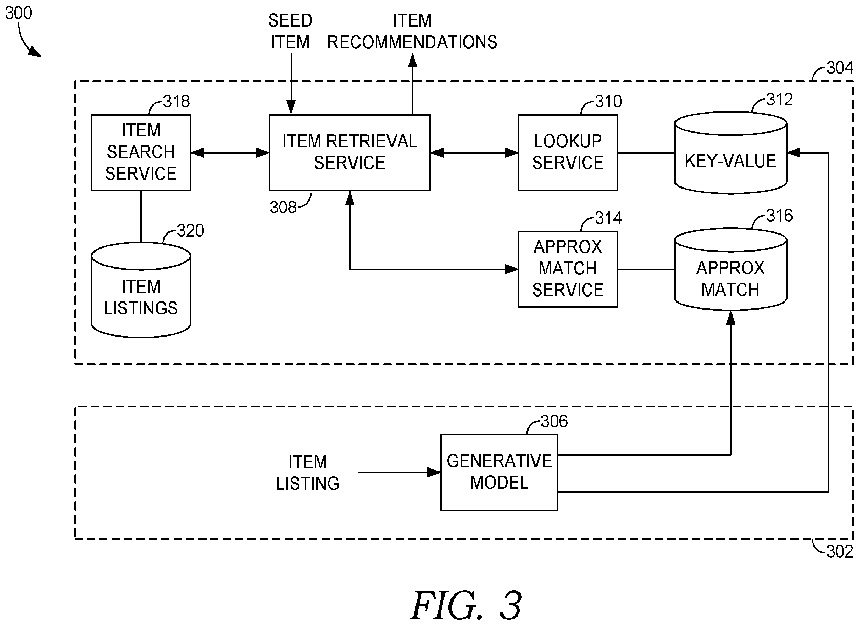

FIG. 3 is a block diagram showing a process 300 for performing item retrieval using cached synthetic items in accordance with one aspect of the present technology. The process 300 includes both a caching process 302 and a runtime process 304. The caching process 302 generates and caches synthetic items for item listings. The caching process 302 could be performed offline (e.g., for item listings having high demand on the listing platform) or could be performed for a seed item listing at runtime when no exact match or approximate match is identified for the seed item listing.

As shown in FIG. 3, the caching process 302 involves providing an input to a generative model 306 based on an item listing. The input to the generative model 306 can be a prompt that comprises text identifying the item listing (e.g., item title or item description) and providing instructions to the generative model 306 regarding how to generate the synthetic items (e.g., whether to generate synthetic items that are similar to the seed item or complimentary to the seed item). The generative model 306 can correspond to the generative model used by the generative model component 112 of FIG 1. Given the prompt, the generative model 306 generates text identifying one or more synthetic items. The text for each synthetic item could comprise, for instance, an item title or item description.

In the embodiment of FIG. 3, both exact matching and approximate matching are employed. Accordingly, to facilitate exact matching, a textual indication of the item listing (e.g., item listing identifier, item title, item description) is stored as a key in the key-value store and the synthetic items generated for the item listing are stored as values in association with that key. Additionally, to facilitate approximate matching, an indication of the item listing (e.g., text such as item title or item description; or a vector representation) is stored in the approximate match data store 316. In some instances, the synthetic items are also stored in the approximate match data store 316 in association with the indication of the item listing.

The runtime process 304 involves receiving input comprising a textual indication of a seed item listing (e.g., an item listing identifier, item title, or item description) or multiple seed item listings at an item retrieval service 308. The item retrieval service 308 can be provided, for instance, by the item retrieval system 106 of FIG. 1. In accordance with the example of FIG. 3, the item retrieval service 308 coordinates the runtime process of a number of services to perform item retrieval.

The textual indication of the seed item listing is provided to a lookup service 310, which can correspond to the lookup component 114 of FIG. 1. The lookup service 310 determines whether a matching item listing is present in the key-value store 312. If a matching item listing is found in the key-value store 312, one or more synthetic items stored in association with the matching item listing are returned to the item retrieval service 308.

If a matching item listing is not found in the key-value store 312, a no-match indication is returned to the item retrieval service 308, and the item retrieval service 308 then provides the textual indication of the seed item listing to an approximate match service 314, which can correspond to the approximate match component 116 of FIG. 1. The approximate match service 314 searches the approximate match data store 316 using the textual indication of the seed item listing or a vector representation of the seed item listing to determine if a similar item listing for the seed item listing is stored in the approximate match data store 316. If a similar item listing is identified, in some aspects, synthetic items stored in association with the similar item listing in the approximate match data store 316 are retrieved and returned to the item retrieval service 308. Alternatively, in some aspects, a textual indication of the similar item listing (e.g., item listing identifier, item title, item description) is returned to the item retrieval service 308, which provides the textual indication of the similar item listing to the lookup service 310 to retrieve the synthetic items from the key-value store 312.

After receiving one or more synthetic items for the seed item listing, the item retrieval service 308 provides the synthetic item(s) to an item search service 318, which can correspond to the item search component 118 of FIG. 1. The item search service 318 employs the synthetic item(s) to query an item listings data store 320 to identify and rank item listings to return as item listing recommendations. An indication of the item listings is returned to the item retrieval service 308. The item retrieval service 308 provides an output identifying the item listings as item listing recommendations.

In some instances, no matching item listing is identified by the lookup service 310 and no similar item listing is identified by the approximate match service 314. This results in no cached synthetic items being returned to the item retrieval service 308. In some aspects, the item retrieval service 308 can cause the generative model 306 to generate one or more synthetic items for the seed item listing and provide those synthetic item(s) to the item search service 318 for identifying and ranking item listings to return as item recommendations. In other aspects, the item retrieval service 308 can employ an alternative recommendation approach to generate item recommendations. For instance, item recommendations could be generated using a conventional item recommendation approach based on user behavior information for item listings.

### Example Methods for Item Retrieval using Synthetic Items from a Generative Model

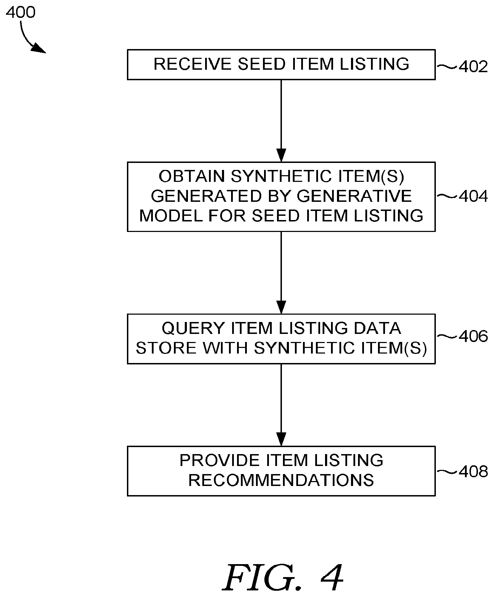

With reference now to FIG. 4, a flow diagram is provided that illustrates a method 400 for performing item retrieval using synthetic items from a generative model. The method 400 may be performed, for instance, by the item retrieval system 106 of FIG. 1. Each block of the method 400 and any other methods described herein comprises a computing process performed using any combination of hardware, firmware, and/or software. For instance, various functions can be carried out by a processor executing instructions stored in memory. The methods can also be embodied as computer-usable instructions stored on computer storage media. The methods can be provided by a standalone application, a service or hosted service (standalone or in combination with another hosted service), or a plug-in to another product, to name a few.

As shown at block 402, an input for a seed item listing is received. The seed item listing is an item listing that is available from a listing platform, such as the listing platform 104 of FIG. 1. The input comprises a textual indication of the seed item listing, such as, for instance, an item listing identifier, an item title, or an item description for the seed item listing (e.g., retrieved from item listing data for the item in an item listings data store, such as the item listings data store 122 of FIG. 1).

A textual indication of one or more synthetic items generated by a generative model for the seed item listing is obtained, as shown at block 404. In some aspects, the synthetic item(s) are generated by the generative model at runtime (i.e., after receiving the input at block 402). In such aspects, the process can include generating a prompt using the input received at block 402 and providing the prompt to the generative model. In some aspects, the prompt is generated based on a category of the seed item listing, for instance, by using a predefined template for the category. In some aspects, the prompt is generated based on the type of item retrieval task. For instance, one type of prompt may be employed for retrieving complimentary items, while another type of prompt may be employed for retrieving similar items.

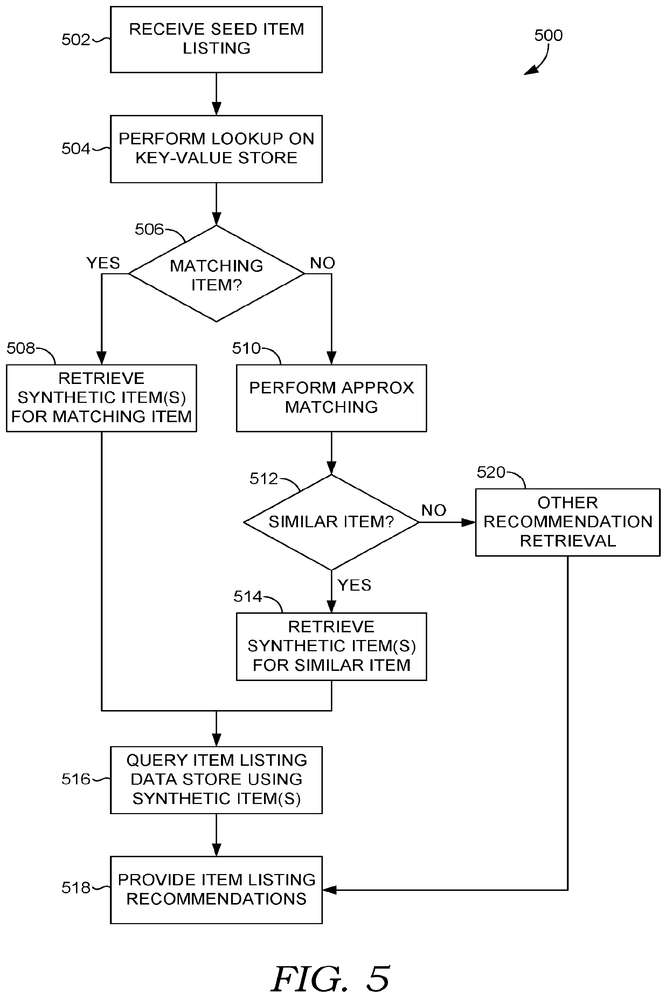

In other aspects, instead of generating the synthetic items at runtime, the one or more synthetic items are obtained at block 404 using one or more caches storing synthetic items previously generated using a generative model (i.e., generated before receiving the input at block 402). For instance, previously-generated synthetic items could be identified from storage using the method 500 discussed below with reference to FIG. 5.

As shown at block 406, an item listings data store for the listing platform (e.g., the item listings data store 122 of FIG. 1) is queried based on each synthetic item obtained for the seed item listing at block 404 in order to identify one or more item listings available on the listing platform. One or more item listing recommendations corresponding to the item listings identified at block 406 are provided for presentation on a user device, as shown at block 408. For instance, the item listing recommendation(s) could be provided on a webpage from the listing platform, such as a webpage providing the seed item listing or a personalized homepage for the user associated with the user device.

Turning next to FIG. 5, a flow diagram is provided that illustrates another method 500 for performing item retrieval using synthetic items from a generative model. The method 500 may be performed, for instance, by the item retrieval system 106 of FIG. 1. As shown at block 502, an input for a seed item listing is received. The seed item listing is an item listing that is available from a listing platform, such as the listing platform 104 of FIG. 1. The input comprises a textual indication of the seed item listing, such as, for instance, an item listing identifier, an item title, or an item description for the seed item listing (e.g., retrieved from item listing data for the item in an item listings data store, such as the item listings data store 122 of FIG. 1).

A lookup is performed on a key-value store (e.g., the key-value store 124 of FIG. 1) using the input, as shown at block 504. The key-value store stores a textual indication of item listings (e.g., item listing identifier, item title, item description) as keys with one or more synthetic items generated by a generative model stored as values in association with each item listing. The lookup determines whether there is an item listing in the key-value store that matches the input seed item listing. For instance, the key-value store could store item listing identifiers as keys. Given an input comprising an item listing identifier for the seed item listing, a lookup is performed on the key-value store to determine if there is a stored item listing identifier that exactly matches the item listing identifier for the seed item listing.

A determination is made at block 506 regarding whether there is a matching item listing for the seed item listing in the key-value store. If there is a matching item listing in the key-value store, the one or more synthetic items stored in the key-value store in association with the matching item listing are retrieved, as shown at block 508. Alternatively, if there is no matching item listing in the key-value store, approximate matching is performed using an approximate match data store (e.g., the approximate match data store 126 of FIG. 1), as shown at block 510. The approximate match data store indexes item listings from the listing platform for which synthetic items have been previously generated. The item listings are stored by the approximate matching data store in a manner that allows for identifying stored item listings that are similar to, although not exact matches to, the seed item listing. For instance, a fuzzy matching or semantic matching could be performed using the textual indication of the seed item listing as input to identify one or more stored item listings in the approximate match data store that are similar to the seed item listing.

As shown at block 512, a determination is made regarding whether there is a similar item listing for the seed item listing in the approximate match data store. For instance, in some aspects, an item listing from the approximate match data store is considered a similar item listing to the seed item listing only if a similarity score between the stored item listing and the seed item listing satisfies a similarity score threshold. If there is a similar item listing identified from the approximate match data store, the one or more synthetic items generated for that similar item listing are retrieved, as shown at block 514. In some aspects, the synthetic items are stored in and retrieved from the approximate match data store. In other aspects, the synthetic items are stored in and retrieved from the key-value store. For instance, an item listing identifier for the similar item listing could be used to perform a lookup on the key-value store to identify the entry for that similar item listing and retrieve the synthetic items in that entry. In some instances, multiple similar item listings are determined at block 512, and one or more synthetic items for each similar item listing are retrieved at block 514.

If one or more synthetic items are retrieved based on a matching item listing at block 508 or based on a similar item listing at block 514, an item listings data store for the listing platform (e.g., the item listings data store 122 of FIG. 1) is queried at block 516 based on each synthetic item in order to identify one or more item listings available on the listing platform. One or more item listing recommendations corresponding to the item listings identified at block 516 are provided for presentation on a user device, as shown at block 518. For instance, the item listing recommendation(s) could be provided on a webpage from the listing platform, such as a webpage providing the seed item listing or a personalized homepage for the user associated with the user device.

In some instances, no matching item listing from the key-value store is determined at block 506 and no similar item listing from the approximate match data store is determined at block 512. In such instances, another recommendation retrieval approach is performed at block 520, and one or more item listing recommendations identified from that approach are provided at block 518. In some aspects, a conventional recommendation retrieval approach could be performed at block 520. In other aspects, at block 520, a generative model could be used to generate one or more synthetic items for the seed item listing and those one or more synthetic items are used to identify item listings from the item listings data store for the listing platform to provide as item listing recommendations.

Although the method 500 of FIG. 5 uses both exact matching and approximate matching, it should be understood that other configurations could use only exact matching or only approximate matching. Additionally, although both the method 400 of FIG. 4 and the method 500 of FIG. 5 have been described as operating on a single seed item listing, in some aspects, multiple seed item listings could be employed in conjunction (e.g., multiple seed item listings recently viewed by user could be used to provide item listing recommendations on the homepage of the listing platform for that user). In such aspects of multiple seed item listings, each seed item listing is processed to identify synthetic items that are used to return item listing recommendations.

### Exemplary Operating Environment

Having described implementations of the present disclosure, an exemplary operating environment in which embodiments of the present technology may be implemented is described below in order to provide a general context for various aspects of the present disclosure. Referring initially to FIG. 6 in particular, an exemplary operating environment for implementing embodiments of the present technology is shown and designated generally as computing device 600. Computing device 600 is but one example of a suitable computing environment and is not intended to suggest any limitation as to the scope of use or functionality of the technology. Neither should the computing device 600 be interpreted as having any dependency or requirement relating to any one or combination of components illustrated.

The technology may be described in the general context of computer code or machine-useable instructions, including computer-executable instructions such as program modules, being executed by a computer or other machine, such as a personal data assistant or other handheld device. Generally, program modules including routines, programs, objects, components, data structures, etc., refer to code that perform particular tasks or implement particular abstract data types. The technology may be practiced in a variety of system configurations, including hand-held devices, consumer electronics, general-purpose computers, more specialty computing devices, etc. The technology may also be practiced in distributed computing environments where tasks are performed by remote-processing devices that are linked through a communications network.

With reference to FIG. 6, computing device 600 includes bus 610 that directly or indirectly couples the following devices: memory 612, one or more processors 614, one or more presentation components 616, input/output (I/O) ports 618, input/output components 620, and illustrative power supply 622. Bus 610 represents what may be one or more busses (such as an address bus, data bus, or combination thereof). Although the various blocks of FIG. 6 are shown with lines for the sake of clarity, in reality, delineating various components is not so clear, and metaphorically, the lines would more accurately be grey and fuzzy. For example, one may consider a presentation component such as a display device to be an I/O component. Also, processors have memory. The inventors recognize that such is the nature of the art, and reiterate that the diagram of FIG. 6 is merely illustrative of an exemplary computing device that can be used in connection with one or more embodiments of the present technology. Distinction is not made between such categories as "workstation," "server," "laptop," "hand-held device," etc., as all are contemplated within the scope of FIG. 6 and reference to "computing device."

Computing device 600 typically includes a variety of computer-readable media. Computer-readable media can be any available media that can be accessed by computing device 600 and includes both volatile and nonvolatile media, removable and non-removable media. By way of example, and not limitation, computer-readable media may comprise computer storage media and communication media. Computer storage media includes both volatile and nonvolatile, removable and non-removable media implemented in any method or technology for storage of information such as computer-readable instructions, data structures, program modules or other data.

Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 600. The terms "computer storage media" and "computer storage medium" do not comprise signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 612 includes computer storage media in the form of volatile and/or nonvolatile memory. The memory may be removable, non-removable, or a combination thereof. Exemplary hardware devices include solid-state memory, hard drives, optical-disc drives, etc. Computing device 600 includes one or more processors that read data from various entities such as memory 612 or I/O components 620. Presentation component(s) 616 present data indications to a user or other device. Exemplary presentation components include a display device, speaker, printing component, vibrating component, etc.

I/O ports 618 allow computing device 600 to be logically coupled to other devices including I/O components 620, some of which may be built in. Illustrative components include a microphone, joystick, game pad, satellite dish, scanner, printer, wireless device, etc. The I/O components 620 may provide a natural user interface (NUI) that processes air gestures, voice, or other physiological inputs generated by a user. In some instance, inputs may be transmitted to an appropriate network element for further processing. A NUI may implement any combination of speech recognition, touch and stylus recognition, facial recognition, biometric recognition, gesture recognition both on screen and adjacent to the screen, air gestures, head and eye-tracking, and touch recognition associated with displays on the computing device 600. The computing device 600 may be equipped with depth cameras, such as, stereoscopic camera systems, infrared camera systems, RGB camera systems, and combinations of these for gesture detection and recognition. Additionally, the computing device 600 may be equipped with accelerometers or gyroscopes that enable detection of motion.

The present technology has been described in relation to particular embodiments, which are intended in all respects to be illustrative rather than restrictive. Alternative embodiments will become apparent to those of ordinary skill in the art to which the present technology pertains without departing from its scope.

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described herein may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the technology is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further, the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present technology are described with reference to a distributed computing environment; however, the distributed computing environment depicted herein is merely exemplary. Components can be configured for performing novel embodiments of embodiments, where the term "configured for" can refer to "programmed to" perform particular tasks or implement particular abstract data types using code. Further, while embodiments of the present technology may generally refer to the technical solution environment and the schematics described herein, it is understood that the techniques described may be extended to other implementation contexts.

From the foregoing, it will be seen that this technology is one well adapted to attain all the ends and objects set forth above, together with other advantages which are obvious and inherent to the system and method. It will be understood that certain features and subcombinations are of utility and may be employed without reference to other features and subcombinations. This is contemplated by and is within the scope of the claims.

## Claims

1. One or more computer storage media storing computer-useable instructions that, when used by one or more computing devices, cause the one or more computing devices to perform operations, the operations comprising:
receiving a textual indication of a seed item listing from a listing platform;
obtaining, based on the seed item listing, a textual indication of one or more synthetic items generated by a generative model;
performing a search on an item listings data store for the listing platform based on the textual indication of the one or more synthetic items to identify one or more item listings; and
providing an indication of the one or more item listings for presentation.

2. The one or more computer storage media of claim 1, wherein obtaining the textual indication of the one or more synthetic items generated by the generative model comprises:
in response to receiving the textual indication of the seed item listing, generating a prompt based on the seed item listing; and
providing the prompt as input to the generative model, causing the generative model to generate the one or more synthetic items.

3. The one or more computer storage media of claim 1 or 2, wherein the prompt includes an item title for the seed item listing;
and/or
wherein the prompt is generated using a predefined prompt template selected based on a category of the seed item.

4. The one or more computer-storage media of any one of the preceding claims, wherein obtaining the one or more synthetic items generated by the generative model comprises:
performing a lookup on a key-value store based on the textual indication of the seed item listing to identify a matching item listing, the key-value data store storing an indication of each of a plurality of item listings for which the generative model has generated synthetic items; and
retrieving the one or more synthetic items stored in associated with the matching item listing.

5. The one or more computer-storage media of any one of the preceding claims, wherein obtaining the one or more synthetic items generated by the generative model comprises:
performing a search on an approximate match data store based on the textual indication of the seed item listing to identify a similar item listing, the approximate match data store storing an indication of each item listing for which the generative model has generated synthetic items; and
retrieving the one or more synthetic items stored for the similar item listing.

6. The one or more computer storage media of any one of the preceding claims, wherein performing the search on the approximate search data store comprises:
generating a seed item embedding from the textual indication of the seed item listing; and
determining a similarity between the seed item embedding and an item embedding for each of one or more item listings in the approximate match data store;
and/or
wherein obtaining the one or more synthetic items generated by the generative model further comprises:
performing a lookup on a key-value store based on the textual indication of the seed item listing; and
determining an exact match for the seed item listing is absent from the key-value store, wherein the search on the approximate match data store is performed in response to determining an exact match for the seed item listing is absent from the key-value store.

7. The one or more computer storage media of any one of the preceding claims, wherein obtaining the one or more synthetic items generated by the generative model comprises:
performing a search on an approximate match data store based on the textual indication of the seed item listing, the approximate match data store storing an indication of item listing for which the generative model has generated synthetic items; and
in response to determining there is no similar item in the approximate match data store having a similarity score that satisfies a similarity threshold, providing an input based on the seed item listing to the generative model, causing the generative model to generate the one or more synthetic items.

8. A computer-implemented method comprising:
receiving a textual indication of a seed item listing from a listing platform;
causing a generative model to generate a textual indication of one or more synthetic items based on the textual indication of the seed item listing;
performing a search on an item listings data store for the listing platform based on the textual indication of the one or more synthetic items to identify one or more item listings; and
providing an indication of the one or more item listings for presentation.

9. The computer-implemented method of claim 8, wherein causing the generative model to generate the textual indication of the one or more synthetic items comprises:
in response to receiving the textual indication of the seed item listing, generating a prompt based on the seed item listing; and
providing the prompt as input to the generative model, causing the generative model to generate the one or more synthetic items.

10. The computer-implemented method of claim 8 or 9, wherein the prompt includes an item title for the seed item listing;
and/or
wherein the prompt is generated using a predefined prompt template selected based on a category of the seed item and/or user behavior information for a user.

11. The computer-implemented method of any one of claims 8 to 10, wherein the method further comprises:
performing a search on an approximate match data store based on the textual indication of the seed item listing, the approximate match data store storing an indication of each item listing for which the generative model has generated synthetic items; and
determining a similar item listing for the seed item listing is absent from the approximate match data store.

12. The computer-implemented method of any one of claims 8 to 11, wherein performing the search on the approximate search data store comprises:
generating a seed item embedding from the textual indication of the seed item listing; and
determining a similarity between the seed item embedding and an item embedding for each of one or more item listings in the approximate match data store;
and/or
wherein the method further comprises:
performing a lookup on a key-value store based on the textual indication of the seed item listing; and
determining an exact match for the seed item listing is absent from the key-value store, wherein the search on the approximate match data store is performed in response to determining an exact match for the seed item listing is absent from the key-value store.

13. A computer system comprising:
one or more processors; and
one or more computer storage media storing computer-useable instructions that, when used by the one or more processors, causes the computer system to perform operations comprising:
receiving a textual indication of a seed item listing from a listing platform;
obtaining, based on the seed item listing, a textual indication of one or more synthetic items generated by a generative model by:
performing a lookup on a key-value store based on the textual indication of the seed item listing,
when determining an exact match for the seed item listing is present in the key-value store, retrieving a textual indication of one or more synthetic items generated by the generative model for the exact match,
when determining an exact match for the seed item listing is absent in the key-value store, performing a search on an approximate match data store based on the textual indication of the seed item listing to identify a similar item listing and retrieving a textual indication of one or more synthetic items generated by the generative model for the similar item listing, the approximate match data store storing an indication of each item listing for which the generative model has generated synthetic items; and
performing a search on an item listings data store for the listing platform based on the textual indication of the one or more synthetic items to identify one or more item listings; and
providing an indication of the one or more item listings for presentation.

14. The computer system of claim 13, wherein the key-value store includes an item listing identifier as a key for each of a plurality of item listings for which the generative model has generated synthetic items, and wherein performing the lookup on the key-value store comprises determining whether an item listing identifier in the key-value store matches an item listing identifier for the seed item listing.

15. The computer system of claim 13 or 14, wherein performing the search on the approximate search data store comprises:
generating a seed item embedding of the seed item listing; and
determining a similarity between the seed item embedding and an item embedding for each of one or more item listings in the approximate match data store;
wherein, optionally, the seed item embedding is generated by providing an item title and/or item description of the seed item listing to an embedding model.
